# EUROPÄISCHE PATENTSCHRIFT

(11) **EP 3 958 385 B1**
(45) Veröffentlichungstag und Bekanntmachung des Hinweises auf die Patenterteilung: **25.09.2024**
(21) Anmeldenummer: 20191725.9
(22) Anmeldetag: 19.08.2020
(51) Int. Cl.: H01M 50/258

(54) **BATTERIEMODUL UND VERFAHREN ZUR HERSTELLUNG EINES BATTERIEMODULS**
BATTERY MODULE AND METHOD FOR PRODUCING A BATTERY MODULE
MODULE DE BATTERIE ET PROCÉDÉ DE FABRICATION D'UN MODULE DE BATTERIE

(43) Veröffentlichungstag der Anmeldung: 23.02.2022
(73) Patentinhaber: VARTA Microbattery GmbH, 73479 Ellwangen Jagst (DE)
(72) Erfinder: Hoffmann, Tim, 73450 Neresheim (DE)
(74) Vertreter: Ostertag & Partner Patentanwälte mbB

(56) Entgegenhaltungen:
- DE-A1- 102011 075 044
- KR-A- 20170 051 817
- US-A1- 2002 093 246

## Beschreibung

Die vorliegende Erfindung betrifft eine Batterie, die mindestens zwei Batteriemodule umfasst, sowie ein Verfahren zur Herstellung einer derartigen Batterie.

### ANWENDUNGSGEBIET UND STAND DER TECHNIK

Eine Batterie ist ein Speicher für elektrische Energie, der aus einer Mehrzahl von elektrochemischen Energiespeicherzellen aufgebaut ist. Größere Batterien sind meist aus Batteriemodulen zusammengesetzt, die entweder einzelne Energiespeicherzellen oder mehrere miteinander verschaltete Energiespeicherzellen umfassen können. Die Anzahl der von einem Batteriemodul umfassten Energiespeicherzellen hängt von den jeweils benötigten Strömen und Spannungen ab. Für Anwendungen im Bereich der Elektromobilität oder für große stationäre Energiespeicher werden in der Regel sehr große Ströme und hohe Spannungen benötigt.

Jede elektrochemische Energiespeicherzelle im Sinne der vorliegenden Anmeldung umfasst mindestens eine positive und mindestens eine negative Elektrode, welche durch einen Separator voneinander getrennt sind. In elektrochemischen Energiespeicherzellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab. Die andere Teilreaktion läuft bei vergleichsweise höherem Redoxpotential an der positiven Elektrode ab. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb der elektrochemischen Energiespeicherzelle. Dieser lonenstrom durchquert den Separator und wird durch einen ionenleitenden Elektrolyten gewährleistet.

In sekundären (wieder aufladbaren) elektrochemischen Energiespeicherzellen ist diese Entladereaktion reversibel, es besteht also die Möglichkeit, die bei der Entladung erfolgte Umwandlung chemischer Energie in elektrische Energie umzukehren.

Eine in Batteriemodulen oftmals verwendete elektrochemische Energiespeicherzelle istdie Lithiumlonen-Zelle. Diese umfasst Elektroden, die Lithium-Ionen reversibel aufnehmen und wieder abgeben können, sowie einen Lithiumionen enthaltenden Elektrolyten.

Bei elektrochemischen Energiespeicherzellen, auch bei Lithium-Ionen-Zellen, sind verschiedene Bauformen bekannt. Neben prismatischen Formen sind Knopfzellen und zylindrische Rundzellen weit verbreitet. Sowohl Knopfzellen als auch Rundzellen haben eine kreisförmige Grundfläche. Dabei unterscheiden sich zylindrische Rundzellen von Knopfzellen darin, dass Knopfzellen eine Höhe aufweisen, die geringer als ihr Durchmesser ist. Zylindrische Rundzellen weisen hingegen eine Höhe auf, die größer als ihr Durchmesser ist. In Batteriemodulen der oben genannten Art kommen häufig prismatische Zellen oder zylindrische Rundzellen zum Einsatz. Die Verwendung letzterer kann im Hinblick auf eine Kühlung der Energiespeicherzellen vorteilhaft sein, da in den Räumen zwischen benachbarten zylindrischen Zellen Kühlmedien zirkulieren können.

Batteriemodule haben oftmals ein kubisches Gehäuse mit einer rechteckigen Oberseite und einer rechteckigen Unterseite und vier rechteckigen Seitenwänden. Bei der Montage der Batteriemodule zu einer Batterie ist es in der Regel vorgesehen, dass die Batteriemodule nebeneinander ausgerichtet werden, um dann entsprechend verschaltet werden zu können. Die richtige Positionierung und Orientierung der einzelnen Batteriemodule, deren Ausrichtung und die Feinjustierung beim Zusammenbau der Batteriemodule erfolgt dabei in der Regel von Hand und ist verhältnismäßig aufwendig und personalintensiv.

Aus der DE 102011075044 A1 sind Batteriebauteile bekannt, die über formschlüssige Steckverbindungen verbunden werden. In Fig. 1 der DE 102011075044 A1 D1 ist ein Gehäuse dargestellt, bei dem die Bauteile 1b und 1c über ein eingeschobenes Verbindungselement 2Z mechanisch miteinander verbunden werden.

Aus der KR 20170051817 A sind koppelartige Verbindungselemente beschrieben, die in randständige Ausnehmungen von nebeneinanderliegenden Batteriemodulen oder Ähnlichem eingreifen (siehe insbesondere Fig. 12). Diese Verbindungselemente werden jeweils mit zwei Schrauben fixiert.

Aus der US 2002/0093246 A1 ist ein Verbindungselement für Batteriemodule bekannt. Dieses zeigt allerdings weder eine Ausgestaltung mit zwei Endstücken, die jeweils in eine randständige Ausnehmung von benachbarten Batteriemodulen eingreifen, noch ist hier ein Mittelstück vorgesehen.

### AUFGABE UND LÖSUNG

Die Erfindung stellt sich demgegenüber die Aufgabe, ein Zusammenfügen und eine Montage von einzelnen Batteriemodulen zu einer Batterie zu vereinfachen und zu verbessern. Insbesondere soll dabei die Zusammenführung der Batteriemodule so realisiert werden, dass eine leichte und praktikable Handhabung möglich ist und dass idealerweise auch eine versehentliche Falschmontage vermieden wird.

Diese Aufgabe wird durch eine Batterie mit den Merkmalen des Anspruchs 1 sowie durch ein Verfahren zur Herstellung einer solchen Batterie gemäß dem weiteren nebengeordneten Anspruch gelöst. Bevorzugte Ausgestaltungen dieser Batterie bzw. dieses Verfahrens sind Gegenstand der abhängigen Ansprüche.

Die erfindungsgemäße Batterie umfasst mindestens zwei Batteriemodule, die über mindestens ein Verbindungselement zusammengehalten sind. Hierbei zeichnet sich die erfindungsgemäße Batterie stets durch die folgenden Merkmale aus:
a. Ein erstes Batteriemodul der Batterie weist ein Gehäuse mit mindestens einer ersten randständigen Ausnehmung an einer Gehäuseaußenseite auf.
b. Ein zweites Batteriemodul der Batterie weist ein Gehäuse mit mindestens einer zweiten randständigen Ausnehmung an einer Gehäuseaußenseite auf.
c. Das mindestens eine die Batteriemodule zusammenhaltende Verbindungselement umfasst ein erstes Endstück und ein zweites Endstück und ein die beiden Endstücke verbindendes Mittelstück.
d. Das erste Endstück ist als Haltemittel ausgebildet und greift vorzugsweise formschlüssig in die erste randständige Ausnehmung des ersten Batteriemoduls ein.
e. Das zweite Endstück ist als Haltemittel ausgebildet und greift vorzugsweise formschlüssig in die zweite randständige Ausnehmung des zweiten Batteriemoduls ein.

Die Montage von zwei nebeneinander liegenden Batteriemodulen mittels eines oder mehrererVerbindungselemente, die in entsprechende randständige Ausnehmungen an den Gehäuseaußenseiten der Batteriemodule eingreifen und die die Batteriemodule aneinanderkoppeln, erlaubt auf der einen Seite eine sehr einfach durchzuführende und dabei sehr genaue und fehlerfreie Montage einer Batterie. Auf der anderen Seite können auf diese Weise sehr genau justierte und sicher miteinander verbundene Batteriemodule in einer Batterie bereitgestellt werden, wobei auch eine nachträgliche Entfernung oder Hinzufügung weiterer Batteriemodule ohne Probleme möglich ist.

Bei einer erfindungsgemäßen Batterie greift das Verbindungselement in zwei nebeneinander liegende Ausnehmungen in den Gehäuseaußenseiten von benachbarten Batteriemodulen ein und koppelt dabei die Batteriemodule aneinander. Die Endstücke des Verbindungselements und die Ausnehmungen in den jeweiligen Gehäuseaußenseiten der Batteriemodule passen dabei wie Schlüssel und Schloss zueinander. Die Endstücke des Verbindungselements und die Ausnehmungen in den Gehäuseaußenseiten der nebeneinander liegenden Batteriemodule sind dabei bevorzugt gegengleich gestaltet.

Auf diese Art können zwei und vorzugsweise auch mehr Batteriemodule aneinander montiert werden. Beispielsweise können auf diese Weise 10 oder mehr, insbesondere 20 oder mehr, beispielsweise 25, Batteriemodule stabil zu einer Batterie zusammengefügt werden.

Die Batteriemodulen der erfindungsgemäßen Batterie umfassen wie die eingangs beschriebenen Module entweder einzelne Energiespeicherzellen oder mehrere miteinander verschaltete Energiespeicherzellen. Bei den Energiespeicherzellen handelt es sich hierbei bevorzugt um Lithium-Ionen-Zellen.

Vorzugsweise können mehrere Verbindungselemente je Seite des Batteriemoduls vorgesehen sein, beispielsweise zwei Verbindungselemente, die über die Länge der Seite des Batteriemoduls verteilt sind. Hierdurch kann eine besonders stabile Anbindung der Batteriemodule aneinander erreicht werden.

Die Gehäuseaußenseiten der Batteriemodule sind bevorzugt plan ausgebildet und weisen weiter bevorzugt lediglich Vertiefungen auf, die bei der Handhabung und insbesondere der Zusammenschaltung der Batteriemodule nicht hinderlich sind.

In besonders bevorzugter Weise zeichnet sich die erfindungsgemäße Batterie durch die folgenden zusätzlichen Merkmale a. und b. aus:
a. Die Gehäuseaußenseiten der Batteriemodule mit den randständigen Ausnehmungen sind parallel zueinander ausgerichtet und grenzen unmittelbar aneinander an.
b. Die erste randständige Ausnehmung umfasst mindestens eine Hinterschneidung, die mit dem als Haltemittel ausgebildeten ersten Endstück zusammenwirkt.
c. Die zweite randständigen Ausnehmung umfasst mindestens eine Hinterschneidung, die mit dem als Haltemittel ausgebildeten zweiten Endstück zusammenwirkt.
d. Zwischen dem ersten Batteriemodul und dem mindestens eine Verbindungselementsowie dem zweiten Batteriemodul und dem mindestens eine Verbindungselement besteht jeweils einen Formschluss senkrecht zu den parallel zueinander ausgebildeten Gehäuseaußenseiten der Batteriemodule.

Dabei sind die unmittelbar vorstehenden Merkmale a. bis d. vorzugsweise in Kombination miteinander verwirklicht.

Durch das System von randständigen Ausnehmungen an den Gehäuseaußenseiten der Batteriemodule im Zusammenspiel mit den Verbindungselementen, die entsprechend in die Ausnehmungen eingefügt werden, ist bei der erfindungsgemäßen Batterie die Ausrichtung und die mechanische Parallelverbindung der Batteriemodule in optimaler Weise gelöst.

Durch die Hinterschneidungen kann in besonders vorteilhafter Weise der Formschluss zwischen den Batteriemodulen und dem jeweiligen Endstück hergestellt werden. Insbesondere wird hierdurch vermieden, dass bei einer gegengleichen Ausgestaltung der Verbindungselemente ein Herausrutschen der Verbindungselemente aus den randständigen Ausnehmungen der Batteriemodule in seitlicher Richtung auftreten kann. Das Verbindungselement wird in die randständigen Ausnehmungen der Batteriemodule eingesetzt und fixiert diese aneinander.

In einer ganz besonders bevorzugten Ausgestaltung der erfindungsgemäßen Batterie zeichnet sich das Verbindungselement durch mindestens eines der folgenden Merkmale aus:
a. Das erste und das zweite Endstück des Verbindungselements unterscheiden sich in ihrer Größe.
b. Das erste und das zweite Endstück des Verbindungselements (10; 50) unterscheiden sich in ihrer Form.

Durch die unterschiedliche Ausgestaltung der beiden Endstücke eines Verbindungselements wird erreicht, dass das Verbindungselement in nur einer Orientierung in die entsprechend gegengleich ausgestalteten und damit unterschiedlichen Ausnehmungen in den Gehäuseaußenseiten der nebeneinander liegenden Batteriemodule eingesetzt werden kann. Damit ist eine falsche Zusammenfügung und Montage der Batteriemodule ausgeschlossen. Da das Verbindungselement nur dann passt, wenn zwei Ausnehmungen in den Gehäuseaußenseiten benachbarter Batteriemodule unmittelbar nebeneinander liegen, wird eine korrekte Ausrichtung der Batteriemodule zueinander sichergestellt. Beispielsweise wird dadurch eine versehentliche Verpolung ausgeschlossen.

In besonders bevorzugter Weise zeichnet sich die erfindungsgemäße Batterie durch die folgenden zusätzlichen Merkmale aus:
a. Das erste und/oder das zweite Endstück des Verbindungselements weisen einen schwalbenschwanzartigen Querschnitt auf.
b. Das Verbindungselement ist mit dem ersten und dem zweiten Batteriemodul jeweils über eine Schwalbenschwanzverbindung verbunden.

Die Schwalbenschwanzverbindung ist eine besonders effiziente Form, das Verbindungselement und die Batteriemodule starr und formschlüssig aneinander zu binden.

Prinzipiell sind auch andere Formen der Endstücke des Verbindungselements und in gegengleicher Weise bei den Ausnehmungen auf den Gehäuseaußenseiten der Batteriemodule möglich, beispielsweise in derArt der Hinterschneidung.

In besonders vorteilhaften Ausführungsformen zeichnet sich die erfindungsgemäße Batterie im Hinblick auf die Ausgestaltung des Verbindungselements durch das folgende zusätzliche Merkmal aus:
a. Das erste und/oder das zweite Endstück des Verbindungselements sind jeweils von einem umlaufenden Steg gebildet.

Der jeweils umlaufende Steg ist vorzugsweise sowohl bei dem ersten als auch bei dem zweiten Endstück eines Verbindungselements realisiert.

In der Ausgestaltung des Verbindungselements mit umlaufenden Stegen zur Ausbildung der Endstücke kann zum einen eine sehr stabile Ausführung des Verbindungselements erreicht werden. Auf der anderen Seite bietet die Ausgestaltung der Endstücke als umlaufende Stege den besonderen Vorteil, dass hierdurch eine zentrale Aussparung jeweils in den Endstücken des Verbindungselements realisiert wird, die für die nachfolgend beschriebenen weiteren bevorzugten Ausgestaltungen der Erfindung besondere Vorteile bietet.

Darüber hinaus kann in bevorzugten Ausgestaltungen das erste und/oder zweite Endstück des Verbindungselements Aussparungen zum Eingriff eines Betätigungsmittels aufweisen. Mithilfe eines Betätigungsmittels, beispielsweise einem handlichen Werkzeug wie einem Schraubendreher oder Ähnlichem, kann das Verbindungselement auch nach einer Montage der Batterie wieder entfernt werden, indem es durch Eingriff in die Aussparungen gewissermaßen herausgehebelt wird.

In ganz besonders vorteilhafter Weise können diese Aussparungen gemäß dem folgenden zusätzlichen Merkmal realisiert werden:
a. Das erste und/oder das zweite Endstück des Verbindungselements werden jeweils von einem umlaufenden Steg mit einer Oberseite und einer Unterseite gebildet und die Aussparungen sind bogenförmige Aussparungen auf der Unterseite der Stege.

Durch die bogenförmigen Aussparungen auf der Unterseite der Stege, die die Endstücke des Verbindungselements bilden, ist in besonders einfach zu realisierender Weise eine Eingriffsmöglichkeit gegeben, um das Verbindungselement nach dessen Montage gegebenenfalls wieder entfernen zu können.

Erfindungsgemäß ist im Hinblick auf das Verbindungselement das folgende zusätzliche Merkmal vorgesehen:
a. In das Mittelstück des Verbindungselements ist ein Spreizmittel zur Spreizung des Verbindungselements, insbesondere des die beiden Endstücke verbindenden Mittelstücks, eingebracht.

Besonders bevorzugt weist das Mittelstück des Verbindungselements in Längsrichtung des Verbindungselements einen Spalt auf.

Durch Einbringen des Spreizmittels ist es möglich, das Mittelstück entlang des Spalts aufzuspreizen. Vorzugsweise durchtrennt dabei der Spalt das Mittelstück in seiner gesamten Länge, wobei der Spalt dann vorzugsweise in den zentralen Aussparungen der Endstücke mündet, die vorzugsweise durch die umlaufenden Stege der Endstücke gebildet sind.

Durch die Einbringung eines Spreizmittels und eine so erreichbare Spreizung des Verbindungselements ist es möglich, das Verbindungselement nach dessen Einsetzen in die Ausnehmungen der Batteriemodule in besonders stabiler und zuverlässiger Weise nachträglich zu fixieren, so dass dadurch eine besondere Stabilität der montierten Batteriemodule in ihrer Position zueinander erreicht werden kann. Durch die Spreizung verbleibt das Verbindungselement in besonders sicherer Weise in seiner Position und kann nicht mehr herausfallen.

Bei dem Spreizmittel zur Spreizung des Verbindungselements handelt es sich mit besonderem Vorteil um eine Schraube, insbesondere eine selbstschneidende Senkschraube, die mit Hilfe eines entsprechend vorgesehenen Gewindeansatzes in dem Mittelstück des Verbindungselements in das Mittelstück nach dem Einsetzen des Verbindungselements eingedreht werden kann. Der besondere Vorteil der Senkschraube ist dabei, dass sie mit dem einfachen Hilfsmittel eines Schraubendrehers bei Bedarf auch ohne Weiteres wieder entfernt werden kann, um so die Spreizung des Verbindungselements aufzuheben, so dass das Verbindungselement auch wieder entfernt werden kann. Eine Alternative für ein Spreizmittel ist beispielsweise ein konischer Stift, der entsprechend eingesetzt werden kann.

Insbesondere im Zusammenhang mit der Spreizbarkeit des Verbindungselements zeichnet sich die erfindungsgemäße Batterie im Hinblick auf eine entsprechende Ausgestaltung der Ausnehmungen der Batteriemodule vorzugsweise durch mindestens eines der folgenden zusätzlichen Merkmale aus:
a. Die erste randständige Ausnehmung des ersten Batteriemoduls und/oder die zweite randständige Ausnehmung des zweiten Batteriemoduls weisen jeweils eine Seitenwand und einen Boden auf.
b. Der Boden der ersten randständigen Ausnehmung und/oder der zweiten randständigen Ausnehmung umfasst eine von der Seitenwand beabstandete Erhöhung.
c. Die Erhöhung ist zum vorzugsweise formschlüssigen Eingriff in das erste Endstück und/oder in das zweite Endstück des Verbindungselements ausgebildet.

Besonders bevorzugt sind die unmittelbar vorstehenden Merkmale a. bis c. in Kombination realisiert.

Vorzugsweise ist sowohl die Ausnehmung des ersten Batteriemoduls als auch die Ausnehmung des benachbarten, zweiten Batteriemoduls mit einer solchen von der Seitenwand beabstandeten, zum vorzugsweise formschlüssigen Eingriff in das jeweilige Endstück ausgebildeten Erhöhung versehen.

Dieser besonders vorteilhaften Ausgestaltung liegt zugrunde, dass die erwähnte Aufspreizung des Verbindungselements vorzugsweise mit einer Verkürzung des Verbindungselements einhergeht, da dessen Endstücke durch die Spreizung zusammengezogen werden. Da das Verbindungselement mit dem ersten und dem zweiten Batteriemoduljeweils formschlüssig verbunden ist, werden im Ergebnis auch diese zusammengezogen. In dieser Ausgestaltung der Batterie verspannen die nebeneinander liegenden Batteriemodule durch die Spreizung der Verbindungselemente gewissermaßen miteinander, wodurch die Stabilität der montierten Batteriemodule verbessert wird.

Das Verbindungselement kann mit besonderem Vorteil aus Kunststoff bestehen. Kunststoff hat den besonderen Vorteil, dass hiermit ohne Weiteres die erforderliche Stabilität und Biegefestigkeit für das Verbindungselement gewährleistet werden kann. Zudem ist Kunststoff sehr kostengünstig verfügbar und gut zu verarbeiten. Darüber hinaus ist das geringe Gewicht von Kunststoff vorteilhaft, wobei das Gesamtgewicht der resultierenden Batterie durch die Verbindungselemente aus Kunststoff nicht maßgeblich beeinflusst wird.

Kunststoff hat darüber hinaus den Vorteil, dass die erforderliche Flexibilität des Verbindungselements beispielsweise auch im Hinblick auf eine Spreizung des Verbindungselements ohne Weiteres gegeben ist. Zudem kann beispielsweise auch eine selbstschneidende Senkschraube ohne Problem in ein aus Kunststoff gefertigtes Verbindungselement eingefügt werden, da das Kunststoffmaterial ausreichend weich dafür ist.

Als Kunststoff für das Verbindungselement eignen sich verschiedene, weitverbreitete Kunststoffarten. Beispielsweise können Polycarbonate oder Ähnliches verwendet werden. Besonders geeignet ist Polycarbonat/Acetonitrilbutadienstyrol (PC/ABS), da dieser Blend aus Polycarbonat und Acetonitrilbutadienstyrol auf der einen Seite eine sehr gute Verarbeitbarkeit des Materials und auf der anderen Seite hervorragende mechanische Eigenschaften miteinander vereint.

Mit besonderem Vorteil kann ein entsprechendes Verbindungselement aus Kunststoff als Spritzgussteil gefertigt werden. Der Spritzguss als sehr verbreitetes Fertigungsverfahren erlaubt in sehr kostengünstiger und anpassbarer Weise die erforderliche Formgestaltung des Verbindungselements. Darüber hinaus können solche Spritzgussteile ohne Weiteres in einer Massenfertigung produziert werden.

Auch das Gehäuse der Batteriemodule kann mit besonderem Vorteil aus Kunststoff gefertigt sein. Der Vorteil von Kunststoff als Material für die Gehäuse der Batteriemodule liegt in dem geringen Gewicht von Kunststoff, in seiner guten Verarbeitbarkeit, den flexiblen Gestaltungsmöglichkeiten und den elektrisch isolierenden Materialeigenschaften.

Die Erfindung umfasst weiterhin das oben beschriebene Verbindungselement zur Verbindung der Batteriemodule sowie die Batteriemodule mit der mindestens einen randständigen Ausnehmung zum Eingriff eines gegengleich gestalteten Endstücks eines entsprechenden Verbindungselements, wie sie oben beschrieben sind. Bezüglich bevorzugter Merkmale des Verbindungselements sowie der Batteriemodule und den damit verbundenen Vorteilen wird auf die obige Beschreibung verwiesen.

Schließlich umfasst die Erfindung ein Verfahren zur Herstellung einer Batterie, die mindestens zwei Batteriemodule umfasst. Dieses Verfahren ist durch die folgenden Schritte gekennzeichnet:
a. Es wird ein erstes Batteriemodul bereitgestellt, das ein Gehäuse mit mindestens einer ersten randständigen Ausnehmung an einer Gehäuseaußenseite aufweist.
b. Es wird ein zweites Batteriemodul bereitgestellt, das ein Gehäuse mit mindestens einer zweiten randständigen Ausnehmung an einer Gehäuseaußenseite aufweist.
c. Es wird mindestens ein Verbindungselement mit einem ersten Endstück und einem zweiten Endstück und einem die beiden Endstücke verbindenden Mittelstück bereitgestellt.
d. Das erste Batteriemodul und das zweite Batteriemodul werden derart ausgerichtet, dass die Gehäuseaußenseiten der Batteriemodule mit den randständigen Ausnehmungen parallel zueinander ausgerichtet sind und dass die erste randständige Ausnehmung des ersten Batteriemoduls und die zweite randständige Ausnehmung des zweiten Batteriemoduls nebeneinander liegen.
e. Das Verbindungselement wird in die nebeneinander liegenden randständigen Ausnehmungen des ersten Batteriemoduls und des zweiten Batteriemoduls derart eingesetzt, dass das erste Endstück des Verbindungselements in die erste randständige Ausnehmung des ersten Batteriemoduls eingreift und dass das zweite Endstück des Verbindungselements in die zweite randständige Ausnehmung des zweiten Batteriemoduls eingreift.

Erfindungsgemäß zeichnet sich das Verfahren weiterhin durch den folgenden zusätzlichen Schritt aus:
f. Nach dem Einsetzen des Verbindungselements in die nebeneinander liegenden randständigen Ausnehmungen der Batteriemodule wird ein Spreizmittel in das Mittelstück des Verbindungselements zur Spreizung des Verbindungselements eingebracht.

Bezüglich der weiteren Merkmale des Verfahrens insbesondere im Hinblick auf die Ausgestaltung des Verbindungselements und auf die Ausgestaltung der entsprechenden Ausnehmungen der Batteriemodule wird auf die oben beschriebenen Ausführungsformen und die damit verbundenen Vorteile verwiesen.

Mittels des erfindungsgemäßen Verfahrens kann in besonders einfacher Weise die sichere, stabile und korrekte Montage von zwei oder mehr Batteriemodulen zu einer Batterie erreicht werden.

Insbesondere kann durch die vorzugsweise vorgesehene unterschiedliche Form und/oder Größe der Endstücke der Verbindungselemente sichergestellt werden, dass eine Verpolung der Batteriemodule auftreten kann. Dies wird vermieden, indem die Verbindungselemente nur bei korrekter Position passen.

Insgesamt erlaubt das erfindungsgemäße Verfahren eine korrekte Ausrichtung und mechanische Parallelverbindung bei der Montage der Batteriemodule und eine automatische Feinjustierung, ohne dass nachträglich per Hand eine Ausrichtung der Batteriemodule vorgenommen werden müsste. Zudem werden durch die vorzugsweise vorgesehene Spreizbarkeit der Verbindungselemente und dem damit verbundenen Zusammenziehen der nebeneinander liegenden Batteriemodule eine Verspannung und damit eine besonders gute Stabilität der montierten Batteriemodule erreicht.

Ein weiterer besonderer Vorteil des erfindungsgemäßen Verfahrens liegt darin, dass das oder die Verbindungselemente nachträglich auch wieder entfernt werden können, um einzelne Batteriemodule oder gegebenenfalls alle Batteriemodule austauschen zu können.

Je nach Dimension der zu montierenden Batteriemodule bzw. je nach Dimension der Batterie können auch die Dimensionen der Verbindungselemente und der entsprechenden Ausnehmungen in den Gehäuseaußenseiten der Batteriemodule angepasst werden. Für übliche Batteriemodule, die beispielsweise Abmessungen von 255 * 170 * 195 (Länge * Breite * Höhe, jeweils in [mm]) oder von 329 * 80 * 226 (Länge * Breite * Höhe, jeweils in [mm]) aufweisen, können beispielsweise Verbindungselemente mit einer Länge von etwa 1 bis 5 cm, vorzugsweise einer Länge zwischen 2 bis 3 cm, und beispielsweise einer Breite zwischen 0,5 bis 1,5 cm vorgesehen sein. Dabei kann die Breite des Verbindungselements im Mittelstück vorzugsweise zwischen 8 und 10 mm betragen und die Breite an den Enden der Endstücke vorzugsweise zwischen 12 und 15 mm betragen. Wie erläutert, ist es dabei besonders vorteilhaft, wenn sich die beiden Endstücke eines Verbindungselements in ihrer Größe und/oder Form unterscheiden. Beispielsweise kann ein Endstück eine Breite zwischen 12 und 13 mm aufweisen und das gegenüberliegende Ende des anderen Endstücks kann beispielsweise eine Breite zwischen 14 und 15 mm aufweisen. Die entsprechenden Ausnehmungen auf den Gehäuseaußenseiten der Batteriemodule sind im Prinzip gegengleich gestaltet, wobei ein gewisses Spiel bei den Abmessungen vorgesehen sein kann, um das Einsetzen des Verbindungselements in die Ausnehmungen zu erleichtern.

Weitere Merkmale und Vorteile der Erfindung ergeben sich aus den nachfolgend beschriebenen Ausführungsbeispielen in Verbindung mit den Zeichnungen. Hierbei können die einzelnen Merkmalejeweils für sich oder in Verbindung miteinander verwirklicht sein.

### KURZBESCHREIBUNG DER ZEICHNUNGEN

In den Zeichnungen zeigen:
- Fig. 1: Isometrische Schrägansicht von oben auf einer erste bevorzugte Ausführungsform eines Verbindungselements gemäß der Erfindung;
- Fig. 2: Aufsicht auf das Verbindungselement aus Fig. 1;
- Fig. 3: isometrische Schrägansicht von unten auf das Verbindungselement aus Fig. 1;
- Fig. 4: schräge Aufsicht von oben auf das Gehäuse eines Batteriemoduls mit Anbringung eines Verbindungselements gemäß der Erfindung (Ausschnitt);
- Fig. 5: schräge Aufsicht von oben auf drei Batteriemodule, die mit Verbindungselementen gemäß der Erfindung zu einer Batterie zusammengefügt sind;
- Fig. 6: Aufsicht auf zwei nebeneinander liegende Ausnehmungen in den Gehäuseaußenseiten von zwei benachbart liegenden Batteriemodulen; und
- Fig. 7: Aufsicht auf zwei nebeneinander liegende Ausnehmungen in den Gehäuseaußenseiten von zwei benachbart liegenden Batteriemodulen mit eingesetztem Verbindungselement gemäß der Erfindung.

### DETAILLIERTE BESCHREIBUNG DER AUSFÜHRUNGSBEISPIELE

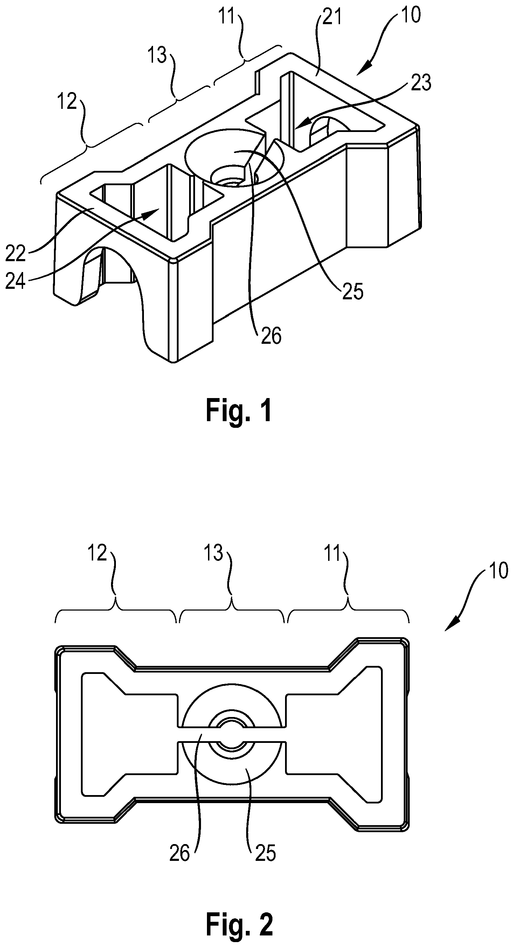

**Fig. 1** zeigt eine erste Ausführungsform eines Verbindungselements 10, das zur Verbindung von zwei nebeneinander liegenden Batteriemodulen zur Ausbildung einer erfindungsgemäßen Batterie vorgesehen ist. Das Verbindungselement 10 umfasst ein erstes Endstück 11, ein zweites Endstück 12 sowie ein dazwischenliegendes Mittelstück 13. Die Endstücke 11 und 12 weisen einen schwalbenschwanzartigen Querschnitt auf, wobei das erste Endstück 11 in der endständigen Breite etwas größer als das zweite Endstück 12 ist. Das erste Endstück 11 und das zweite Endstück 12 werden von jeweils einem umlaufenden Steg 21 bzw. 22 gebildet, wobei die Stege 21 und 22 jeweils eine zentrale Aussparung 23, 24 in den Endstücken 11 und 12 definieren.

Das Mittelstück 13 weist eine zentrale, konisch zulaufende Vertiefung 25 mit dem Ansatz eines Innengewindes auf. Die Vertiefung 25 ist zur Einbringung einer selbstschneidenden Senkschraube (hier nicht dargestellt) vorgesehen. Hierzu kann - losgelöst von der konkreten Ausführungsform gemäß Figur 1- die Vertiefung gegebenenfalls auch ein Innengewinde umfassen. Weiterhin ist in Längsrichtung des Mittelstücks 13 ein zentraler Spalt 26 vorgesehen, der eine Spreizung des Verbindungselements 10 in die Breite bei der Einbringung der Senkschraube oder eines vergleichbaren Spreizmittels erleichtert.

**Fig. 2** zeigt das Verbindungselement 10 aus Fig. 1 in Aufsicht. Zu erkennen ist hier die größere Breite des schwalbenschwanzartigen Endstücks 11 im Vergleich mit dem gegenüberliegenden Endstück 12. Durch diese ungleiche Ausgestaltung der Endstücke 11 und 12 wird die korrekte Positionierung von Batteriemodulen bei deren Montage gewährleistet, da durch entsprechend gegengleiche Ausgestaltungen der in den Gehäuseaußenseiten der Batteriemodule vorgesehenen Ausnehmungen nur jeweils eine Orientierung der Batteriemodule möglich ist, da nur bei der korrekten Position der Batteriemodule das Verbindungselement 10 passt.

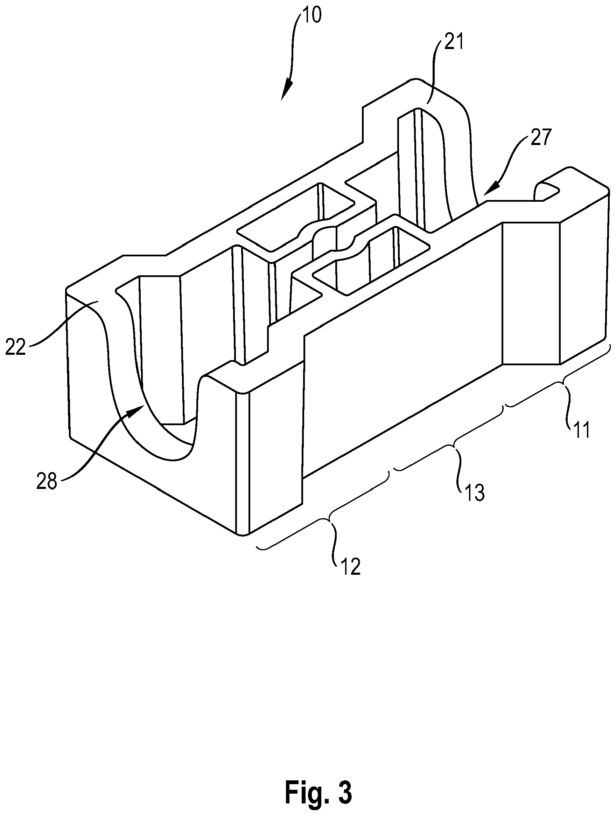

**Fig. 3** zeigt das Verbindungselement 10 aus Fig. 1 in einer Ansicht schräg von unten. Auf der hier sichtbaren Unterseite der Stege 21 und 22, die die Endstücke 11 und 12 bilden, ist jeweils eine bogenförmige Aussparung 27 bzw. 28 vorgesehen. Mithilfe dieser Aussparungen kann im eingesetzten Zustand des Verbindungselements 10 nach der Montage der Batterie ein Betätigungsmittel, beispielsweise ein Schraubendreher, angesetzt werden. Mit dessen Hilfe kann das Verbindungselement 10 aus den entsprechenden Ausnehmungen in den Gehäusen der Batteriemodule gewissermaßen wieder herausgehebelt werden, um die Verbindung zu lösen.

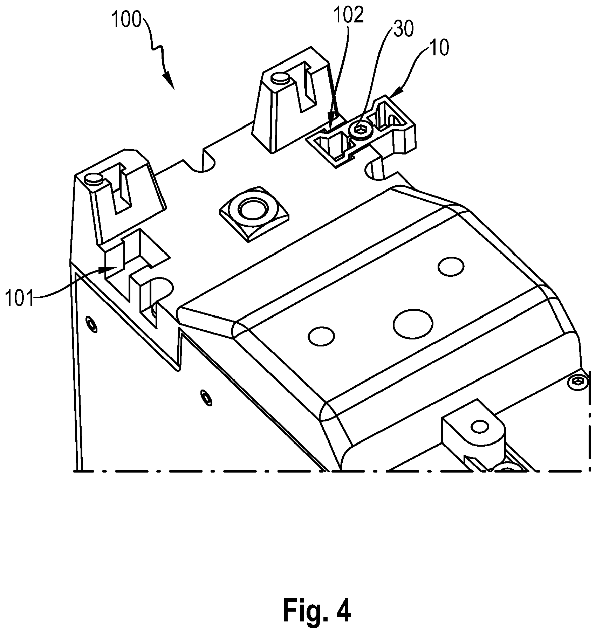

**Fig. 4** zeigt als Ausschnitt die Oberseite eines Batteriemoduls 100, das auf gegenüberliegenden Seiten im Gehäuse an der Oberseite des Batteriemoduls 100 zwei randständige Ausnehmungen 101 und 102 aufweist. Die Ausnehmungen 101 und 102 sind in gegengleicher Weise zu den Endstücken des Verbindungselements 10 ausgestaltet, so dass die Endstücke von zwei Verbindungselementen 10 (hier ist nur ein Verbindungselement 10 gezeigt) in die randständigen Ausnehmungen 101 und 102 eingreifen können und so ein formschlüssiges Haltemittel zur Verbindung von nebeneinander liegenden Batteriemodulen 100 ausbilden können.

In Fig. 4 ist weiterhin eine Senkschraube 30 bzw. deren Schraubenkopf dargestellt, die in die konische Vertiefung 25 des Mittelstücks 13 des Verbindungselements 10 eingeschraubt ist. Durch die Versenkung der Senkschraube 30 in dem Verbindungselement 10 werden die den äußeren Rand des Mittelstücks 13 bildenden Schenkel derart auseinandergedrückt bzw. gespreizt, dass das Verbindungselement 10 besonders fest und stabil in den entsprechenden Ausnehmungen auf der Gehäuseaußenseite des Batteriemoduls 100 verankert wird und somit eine besonders stabile Verbindung von nebeneinander liegenden Batteriemodulen 100 möglich ist.

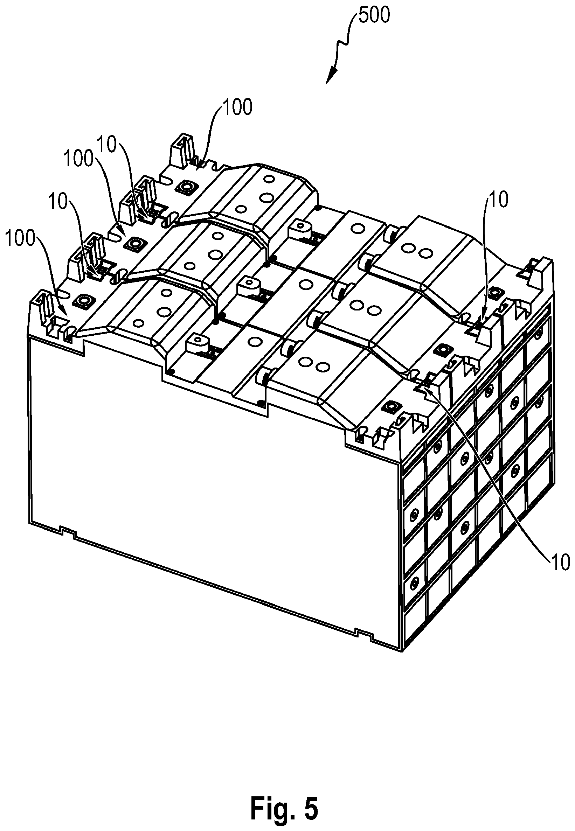

**Fig. 5** zeigt drei nebeneinander liegende Batteriemodule 100, die mittels der Verbindungselemente 10 gemäß der Erfindung zusammengehalten werden. Pro Längsseite des Batteriemoduls 100 sind zwei Verbindungselemente 10 vorgesehen. Hierbei liegen die Gehäuseaußenseiten der Batteriemodule parallel zueinander und grenzen unmittelbar aneinander an, wobei die zur Ankopplung von zwei Batteriemodulen 100 aneinander vorgesehenen zwei Verbindungselemente 10 in die entsprechendeAusnehmungen 101 bzw. 102 auf der Gehäuseaußenseite der Batteriemodule 100 eingreifen. Die aneinandergekoppelten bzw. zusammengehaltenen Batteriemodule 100 bilden dabei die erfindungsgemäße Batterie 500.

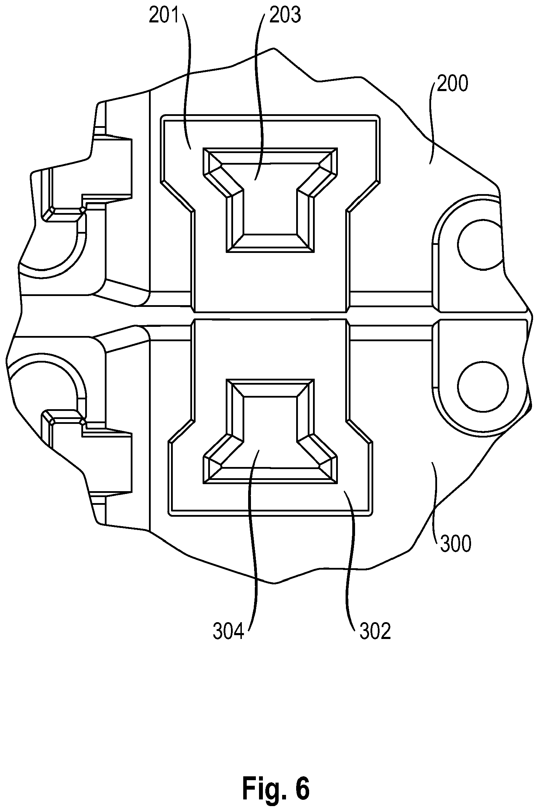

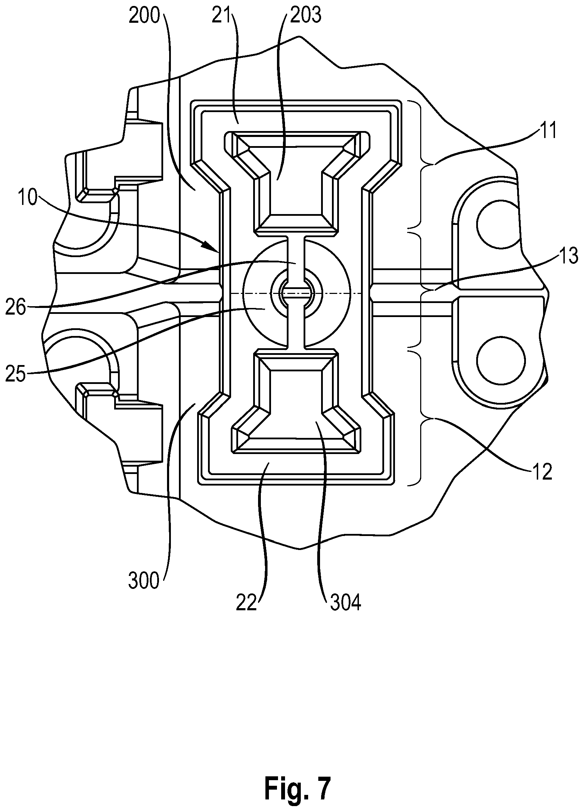

**Fig. 6** zeigt eine Aufsicht auf die randständigen Ausnehmungen in der Gehäuseaußenseiten zweier nebeneinander liegender Batteriemodule 200 und 300. **Fig. 7** zeigt die Batteriemodule 200 und 300 mit dem eingesetzten Verbindungselement 10. Die randständigen Ausnehmungen 201 und 302 zeichnen sich insbesondere durch die jeweils vorhandenen Erhöhungen 203 und 304 aus, die in ihrer Form an die von den Stegen 21 und 22, die die Endstücke 11 und 12 des Verbindungselements 10 bilden und die jeweils einen zentralen Freiraum innerhalb der Endstücke 11 und 12 definieren, angepasst, so dass die Erhöhungen 203 und 304 in die entsprechenden Freiräume des Verbindungselements 10 eingreifen können. Die Erhöhungen 203 bzw. 304 bilden Ankerpunkte für die Endstücke 11 und 12 des Verbindungselements 10, wenn durch das Einsetzen eines Spreizmittels, insbesondere einer Schraube, in das Mittelstück 13 des Verbindungselements 10 die seitlichen Schenkel des Mittelstücks 13 auseinandergedrückt werden und es dadurch zu einerVerkürzungdes Verbindungselements 10 kommt. Durch die dabei eintretende Verkürzung des Verbindungselements 10 werden die Module 200, 300 näher aneinander gezogen. Dies bewirkt eine weitere Stabilisierung und optimale Ausrichtung der nebeneinander liegenden Batteriemodule 200, 300.

Die Höhe der Erhöhungen 203 und 304 innerhalb der Ausnehmungen 201 und 302 ist vorzugsweise an die Höhe des Verbindungselements 10 angepasst, so dass im zusammengesetzten Zustand die obere Seite des Verbindungselements 10 in etwa auf der gleichen Ebene liegt wie die Oberseite der Erhebungen 203 bzw. 304.

## Patentansprüche

1. Batterie (500), umfassend mindestens zwei Batteriemodule (100; 200, 300), die über mindestens ein Verbindungselement (10; 50) zusammengehalten sind, wobei die Batterie durch die folgenden Merkmale gekennzeichnet ist:
a. Ein erstes Batteriemodul (100; 200) weist ein Gehäuse mit mindestens einer ersten randständigen Ausnehmung (101, 102; 201) an einer Gehäuseaußenseite auf.
b. Ein zweites Batteriemodul (100; 300) weist ein Gehäuse mit mindestens einer zweiten randständigen Ausnehmung (101, 102; 302) an einer Gehäuseaußenseite auf.
c. Das mindestens eine die Batteriemodule zusammenhaltende Verbindungselement (10; 50) umfasst ein erstes Endstück (11; 51) und ein zweites Endstück (12; 52) und ein die beiden Endstücke verbindendes Mittelstück (13; 53).
d. Das erste Endstück (11; 51) ist als Haltemittel ausgebildet und greift vorzugsweise formschlüssig in die erste randständige Ausnehmung (101, 102; 201) des ersten Batteriemoduls ein.
e. Das zweite Endstück (12; 52) ist als Haltemittel ausgebildet und greift vorzugsweise formschlüssig in die zweite randständige Ausnehmung (101, 102; 302) des zweiten Batteriemoduls ein.
f. In das Mittelstück (13; 53) des Verbindungselements (10; 50) ist ein Spreizmittel zur Spreizung des Verbindungselements, insbesondere des die beiden Endstücke verbindenden Mittelstücks (13; 53), eingebracht.

2. Batterie nach Anspruch 1 mit mindestens einem der folgenden zusätzlichen Merkmale:
a. Die Gehäuseaußenseiten der Batteriemodule (100; 200, 300) mit den randständigen Ausnehmungen (101, 102; 201, 302) sind parallel zueinander ausgerichtet und grenzen unmittelbar aneinander an.
b. Die erste randständige Ausnehmung (101, 102; 201) umfasst mindestens eine Hinterschneidung, die mit dem als Haltemittel ausgebildeten ersten Endstück (11; 51) zusammenwirkt.
c. Die zweite randständigen Ausnehmung (101, 102; 302) umfasst mindestens eine Hinterschneidung, die mit dem als Haltemittel ausgebildeten zweiten Endstück (11; 51) zusammenwirkt.
d. Zwischen dem ersten Batteriemodul (100; 200) und dem mindestens eine Verbindungselement (10; 50) sowie dem zweiten Batteriemodul (100; 300) und dem mindestens eine Verbindungselement (10; 50) besteht jeweils einen Formschluss senkrecht zu den parallel zueinander ausgebildeten Gehäuseaußenseiten der Batteriemodule (100; 200, 300).

3. Batterie nach einem der vorhergehenden Ansprüche mit mindestens einem der folgenden zusätzlichen Merkmale:
a. Das erste (11; 51) und das zweite Endstück (12; 52) des Verbindungselements (10; 50) unterscheiden sich in ihrer Größe.
b. Das erste (11; 51) und das zweite Endstück (12; 52) des Verbindungselements (10; 50) unterscheiden sich in ihrer Form.

4. Batterie nach einem der vorhergehenden Ansprüche mit den folgenden zusätzlichen Merkmalen:
a. Das erste (11; 51) und/oder das zweite Endstück (12; 52) des Verbindungselements (10; 50) weisen einen schwalbenschwanzartigen Querschnitt auf.
b. Das Verbindungselement (10; 50) ist mit dem ersten und dem zweiten Batteriemodul (100; 200, 300) jeweils über eine Schwalbenschwanzverbindung verbunden.

5. Batterie nach einem der vorhergehenden Ansprüche mit dem folgenden zusätzlichen Merkmal:
a. Das erste (11; 51) und/oder das zweite Endstück (12; 52) des Verbindungselements (10; 50) sind jeweils von einem umlaufenden Steg (21, 22; 54, 55) gebildet.

6. Batterie nach einem der vorhergehenden Ansprüche mit dem folgenden zusätzlichen Merkmal:
a. Das erste (11) und/oder das zweite Endstück (12) des Verbindungselements (10) weisen Aussparungen (27, 28) zum Eingriff eines Betätigungsmittels auf.

7. Batterie nach Anspruch 6 mit dem folgenden zusätzlichen Merkmal:
a. Das erste (11) und/oder das zweite Endstück (12) des Verbindungselements (10) werden jeweils von einem umlaufenden Steg (21, 22) mit einer Oberseite und einer Unterseite gebildet und die Aussparungen sind bogenförmige Aussparungen (27, 28) auf der Unterseite der Stege.

8. Batterie nach einem der vorhergehenden Ansprüche mit mindestens einem der folgenden zusätzlichen Merkmale:
a. Das Mittelstück (13;53) des Verbindungselements (10;50) weist in Längsrichtung des Verbindungselements einen Spalt (26; 57) auf.

9. Batterie nach Anspruch 8 mit einem der folgenden zusätzlichen Merkmale:
a. Das Spreizmittel ist eine Schraube, insbesondere eine selbstschneidende Senkschraube (30).
b. Das Spreizmittel ist ein konischer Stift.

10. Batterie nach Anspruch 8 oder Anspruch 9 mit mindestens einem der folgenden zusätzlichen Merkmale:
a. Die erste randständige Ausnehmung (201) des ersten Batteriemoduls (200) und/oder die zweite randständige Ausnehmung (302) des zweiten Batteriemoduls (300) weisen jeweils eine Seitenwand und einen Boden auf.
b. Der Boden der ersten randständigen Ausnehmung (201) und/oder der zweiten randständigen Ausnehmung (302) umfasst eine von der Seitenwand beabstandete Erhöhung (203, 304).
c. Die Erhöhung (203, 304) ist zum vorzugsweise formschlüssigen Eingriff in das erste Endstück (51) und/oder in das zweite Endstück (52) des Verbindungselements (50) ausgebildet.

11. Batterie nach einem der vorhergehenden Ansprüche mit mindestens einem der folgenden zusätzlichen Merkmale:
a. Das Verbindungselement (10; 50) besteht aus Kunststoff.
b. Das Verbindungselement (10; 50) ist ein Spritzgussteil.

12. Verfahren zur Herstellung einer Batterie (500), die mindestens zwei Batteriemodule (100; 200, 300) umfasst, mit den folgenden Schritten:
a. Es wird ein erstes Batteriemodul (100; 200) bereitgestellt, das ein Gehäuse mit mindestens einer ersten randständigen Ausnehmung (101, 102; 201) an einer Gehäuseaußenseite aufweist.
b. Es wird ein zweites Batteriemodul (100; 300) bereitgestellt, das ein Gehäuse mit mindestens einerzweiten randständigen Ausnehmung (101, 102; 302) an einer Gehäuseaußenseite aufweist.
c. Es wird mindestens ein Verbindungselement (10; 50) mit einem ersten Endstück (11; 51) und einem zweiten Endstück (12; 52) und einem die beiden Endstücke verbindenden Mittelstück (13; 53) bereitgestellt.
d. Das erste Batteriemodul (100; 200) und das zweite Batteriemodul (100; 300) werden derart ausgerichtet, dass die Gehäuseaußenseiten der Batteriemodule mit den randständigen Ausnehmungen parallel zueinander ausgerichtet sind und dass die erste randständige Ausnehmung des ersten Batteriemoduls und die zweite randständige Ausnehmung des zweiten Batteriemoduls nebeneinander liegen.
e. Das Verbindungselement wird in die nebeneinander liegenden randständigen Ausnehmungen des ersten Batteriemoduls und des zweiten Batteriemoduls derart eingesetzt, dass das erste Endstück des Verbindungselements in die erste randständige Ausnehmung des ersten Batteriemoduls eingreift und dass das zweite Endstück des Verbindungselements in die zweite randständige Ausnehmung des zweiten Batteriemoduls eingreift.
f. Nach dem Einsetzen des Verbindungselements (10; 50) in die nebeneinander liegenden randständigen Ausnehmungen (101, 102; 201, 302) der Batteriemodule (100; 200, 300) wird ein Spreizmittel (30) in das Mittelstück (13; 53) des Verbindungselements zur Spreizung des Verbindungselements eingebracht.

13. Verfahren nach Anspruch 12 mit dem folgenden zusätzlichen Merkmal:
a. Das bei dem Verfahren bereitgestellte Batteriemodul (100; 200, 300) und/oder das bei dem Verfahren bereitgestellte Verbindungselement (10; 50) weisen mindestens eines der Merkmale der Ansprüche 2 bis 11 auf.

## Claims

1. A battery (500) comprising at least two battery modules (100; 200, 300) which are held together via at least one connecting element (10; 50), the battery being **characterized by** the following features:
a. A first battery module (100; 200) has a housing having at least one first marginal indentation (101, 102; 201) on a housing exterior.
b. A second battery module (100; 300) has a housing having at least one second marginal indentation (101, 102; 302) on a housing exterior.
c. The at least one connecting element (10; 50) holding the battery modules together comprises a first end piece (11; 51) and a second end piece (12; 52) and a middle piece (13; 53) connecting the two end pieces.
d. The first end piece (11; 51) is in the form of a holding means and preferably form-fittingly engages in the first marginal indentation (101, 102; 201) of the first battery module.
e. The second end piece (12; 52) is in the form of a holding means and preferably form-fittingly engages in the second marginal indentation (101, 102; 302) of the second battery module.
f. Introduced into the middle piece (13; 53) of the connecting element (10; 50) is an expansion means for expanding the connecting element, in particular the middle piece (13; 53) connecting the two end pieces.

2. The battery as claimed in claim 1, having at least one of the following additional features:
a. The housing exteriors of the battery modules (100; 200, 300) having the marginal indentations (101, 102; 201, 302) are aligned parallel to one another and directly adjoin one another.
b. The first marginal indentation (101, 102; 201) comprises at least one undercut which interacts with the first end piece (11; 51) in the form of a holding means.
c. The second marginal indentation (101, 102; 302) comprises at least one undercut which interacts with the second end piece (11; 51) in the form of a holding means.
d. Between the first battery module (100; 200) and the at least one connecting element (10; 50) and between the second battery module (100; 300) and the at least one connecting element (10; 50), there is in each case a form fit perpendicular to the parallel housing exteriors of the battery modules (100; 200, 300).

3. The battery as claimed in either of the preceding claims, having at least one of the following additional features:
a. The first end piece (11; 51) and the second end piece (12; 52) of the connecting element (10; 50) differ in their size.
b. The first end piece (11; 51) and the second end piece (12; 52) of the connecting element (10; 50) differ in their shape.

4. The battery as claimed in any of the preceding claims, having the following additional fea-tures:
a. The first end piece (11; 51) and/or the second end piece (12; 52) of the connecting element (10; 50) have a dovetail-like cross section.
b. The connecting element (10; 50) is connected to the first and the second battery module (100; 200, 300) via a dovetail connection in each case.

5. The battery as claimed in any of the preceding claims, having the following additional feature:
a. The first end piece (11; 51) and/or the second end piece (12; 52) of the connecting element (10; 50) are each formed by an encircling web (21, 22; 54, 55).

6. The battery as claimed in any of the preceding claims, having the following additional feature:
a. The first end piece (11) and/or the second end piece (12) of the connecting element (10) have recesses (27, 28) for engaging a manipulation means.

7. The battery as claimed in claim 6, having the following additional feature:
a. The first end piece (11) and/or the second end piece (12) of the connecting element (10) are each formed by an encircling web (21, 22) having a top side and a bottom side and the recesses are arcuate recesses (27, 28) on the bottom side of the webs.

8. The battery as claimed in any of the preceding claims, having the following additional feature:
a. The middle piece (13; 53) of the connecting element (10; 50) has a gap (26; 57) in the longitudinal direction of the connecting element.

9. The battery as claimed in any of the preceding claims, having one of the following additional features:
a. The expansion means is a screw, in particular a self-tapping countersunk screw (30).
b. The expansion means is a conical pin.

10. The battery as claimed in any of the preceding claims, having at least one of the following additional features:
a. The first marginal indentation (201) of the first battery module (200) and/or the second marginal indentation (302) of the second battery module (300) each have a side wall and a base.
b. The base of the first marginal indentation (201) and/or the second marginal indentation (302) comprises an elevation (203, 304) spaced from the side wall.
c. The elevation (203, 304) is designed for preferably form-fitting engagement in the first end piece (51) and/or in the second end piece (52) of the connecting element (50).

11. The battery as claimed in any of the preceding claims, having at least one of the following additional features:
a. The connecting element (10; 50) consists of plastic.
b. The connecting element (10; 50) is an injection-molded part.

12. A method for producing a battery (500) comprising at least two battery modules (100; 200, 300), having the following steps:
a. A first battery module (100; 200) which has a housing having at least one first marginal indentation (101, 102; 201) on a housing exterior is provided.
b. A second battery module (100; 300) which has a housing having at least one second marginal indentation (101, 102; 302) on a housing exterior is provided.
c. At least one connecting element (10; 50) having a first end piece (11; 51) and a second end piece (12; 52) and a middle piece (13; 53) connecting the two end pieces is provided.
d. The first battery module (100; 200) and the second battery module (100; 300) are aligned in such a way that the housing exteriors of the battery modules having the marginal indentations are aligned parallel to one another and that the first marginal indentation of the first battery module and the second marginal indentation of the second battery module lie side by side.
e. The connecting element is inserted into the side-by-side marginal indentations of the first battery module and the second battery module in such a way that the first end piece of the connecting element engages in the first marginal indentation of the first battery module and that the second end piece of the connecting element engages in the second marginal indentation of the second battery module.
f. After the connecting element (10; 50) has been inserted into the side-by-side marginal indentations (101, 102; 201, 302) of the battery modules (100; 200, 300), a spreading means (30) is inserted into the middle piece (13; 53) of the connecting element to expand the connecting element.

13. The method as claimed in claim 12, having the following additional feature:
a. The battery module (100; 200, 300) provided in the method and/or the connecting element (10; 50) provided in the method have at least one of the features of claims 2 to 11.

## Revendications

1. Batterie (500), comprenant au moins deux modules de batterie (100 ; 200, 300) qui sont maintenus ensemble par au moins un élément de liaison (10 ; 50), la batterie étant **caractérisée par** les caractéristiques suivantes :
a. Un premier module de batterie (100 ; 200) présente un boîtier pourvu d'au moins un premier évidement périphérique (101, 102 ; 201) sur une face extérieure de boîtier.
b. Un deuxième module de batterie (100 ; 300) présente un boîtier pourvu d'au moins un deuxième évidement périphérique (101, 102 ; 302) sur une face extérieure de boîtier.
c. L'au moins un élément de liaison (10 ; 50) maintenant ensemble les modules de batterie comprend une première pièce d'extrémité (11 ; 51) et une deuxième pièce d'extrémité (12 ; 52) et une pièce centrale (13 ; 53) reliant les deux pièces d'extrémité.
d. La première pièce d'extrémité (11 ; 51) est réalisée sous la forme d'un moyen de retenue et s'engage de préférence par complémentarité de forme dans le premier évidement périphérique (101, 102 ; 201) du premier module de batterie.
e. La deuxième pièce d'extrémité (12 ; 52) est réalisée sous la forme d'un moyen de retenue et s'engage de préférence par complémentarité de forme dans le deuxième évidement périphérique (101, 102 ; 302) du deuxième module de batterie.
f. Un moyen d'écartement destiné à écarter l'élément de liaison, en particulier la pièce centrale (13 ; 53) reliant les deux pièces d'extrémité, est introduit dans la pièce centrale (13 ; 53) de l'élément de liaison (10 ; 50) .

2. Batterie selon la revendication 1, présentant au moins l'une des caractéristiques supplémentaires suivantes :
a. Les faces extérieures de boîtier des modules de batterie (100 ; 200, 300) pourvus des évidements périphériques (101, 102 ; 201, 302) sont orientées parallèlement les unes aux autres et sont directement contiguës.
b. Le premier évidement périphérique (101, 102 ; 201) comprend au moins une contre-dépouille qui coopère avec la première pièce d'extrémité (11 ; 51) réalisée sous la forme d'un moyen de retenue.
c. Le deuxième évidement périphérique (101, 102 ; 302) comprend au moins une contre-dépouille qui coopère avec la deuxième pièce d'extrémité (11 ; 51) réalisée sous la forme d'un moyen de retenue.
d. Entre le premier module de batterie (100 ; 200) et l'au moins un élément de liaison (10 ; 50) ainsi qu'entre le deuxième module de batterie (100 ; 300) et l'au moins un élément de liaison (10 ; 50), se trouve respectivement une liaison par complémentarité de forme perpendiculaire aux faces extérieures de boîtier réalisées parallèlement les unes aux autres des modules de batterie (100 ; 200, 300) .

3. Batterie selon l'une quelconque des revendications précédentes, présentant au moins l'une des caractéristiques supplémentaires suivantes :
a. Les première (11 ; 51) et deuxième (12 ; 52) pièces d'extrémité de l'élément de liaison (10 ; 50) se distinguent par leur taille.
b. Les première (11 ; 51) et deuxième (12 ; 52) pièces d'extrémité de l'élément de liaison (10 ; 50) se distinguent par leur forme.

4. Batterie selon l'une quelconque des revendications précédentes, présentant les caractéristiques supplémentaires suivantes :
a. La première (11 ; 51) et/ou la deuxième pièce d'extrémité (12 ; 52) de l'élément de liaison (10 ; 50) présentent une section transversale en queue d'aronde.
b. L'élément de liaison (10 ; 50) est respectivement relié aux premier et deuxième modules de batterie (100 ; 200, 300) par une liaison en queue d'aronde.

5. Batterie selon l'une quelconque des revendications précédentes, présentant la caractéristique supplémentaire suivante :
a. La première (11 ; 51) et/ou la deuxième pièce d'extrémité (12 ; 52) de l'élément de liaison (10 ; 50) sont respectivement formées par une nervure périphérique (21, 22 ; 54, 55).

6. Batterie selon l'une quelconque des revendications précédentes, présentant la caractéristique supplémentaire suivante :
a. La première (11) et/ou la deuxième (12) pièce d'extrémité de l'élément de liaison (10) présentent des évidements (27, 28) destiné à l'engagement d'un moyen d'actionnement.

7. Batterie selon la revendication 6, présentant la caractéristique supplémentaire suivante :
a. La première (11) et/ou la deuxième (12) pièce d'extrémité de l'élément de liaison (10) sont respectivement formées par une nervure périphérique (21, 22) présentant une face supérieure et une face inférieure, et les évidements sont des évidements en forme d'arc (27, 28) sur la face inférieure des nervures.

8. Batterie selon l'une quelconque des revendications précédentes, présentant au moins l'une des caractéristiques supplémentaires suivantes :
a. La pièce centrale (13 ; 53) de l'élément de liaison (10 ; 50) présente une fente (26 ; 57) dans la direction longitudinale de l'élément de liaison.

9. Batterie selon la revendication 8, présentant l'une des caractéristiques supplémentaires suivantes :
a. Le moyen d'écartement est une vis, en particulier une vis à tête fraisée autotaraudeuse (30).
b. Le moyen d'écartement est une tige conique.

10. Batterie selon la revendication 8 ou la revendication 9, présentant au moins l'une des caractéristiques supplémentaires suivantes :
a. Le premier évidement périphérique (201) du premier module de batterie (200) et/ou le deuxième évidement périphérique (302) du deuxième module de batterie (300) présentent chacun une paroi latérale et un fond.
b. Le fond du premier évidement périphérique (201) et/ou du deuxième évidement périphérique (302) comprend une surélévation (203, 304) espacée de la paroi latérale.
c. La surélévation (203, 304) est conçue pour s'engager, de préférence par complémentarité de forme, dans la première pièce d'extrémité (51) et/ou dans la deuxième pièce d'extrémité (52) de l'élément de liaison (50) .

11. Batterie selon l'une quelconque des revendications précédentes, présentant au moins l'une des caractéristiques supplémentaires suivantes :
a. L'élément de liaison (10 ; 50) est constitué de matière plastique.
b. L'élément de liaison (10 ; 50) est une pièce moulée par injection.

12. Procédé de fabrication d'une batterie (500) comprenant au moins deux modules de batterie (100 ; 200, 300), comprenant les étapes suivantes :
a. Il est prévu un premier module de batterie (100 ; 200) qui présente un boîtier pourvu d'au moins un premier évidement périphérique (101, 102 ; 201) sur une face extérieure de boîtier.
b. Il est prévu un deuxième module de batterie (100 ; 300) qui présente un boîtier pourvu d'au moins un deuxième évidement périphérique (101, 102 ; 302) sur une face extérieure de boîtier.
c. Il est prévu au moins un élément de liaison (10 ; 50) comprenant une première pièce d'extrémité (11 ; 51) et une deuxième pièce d'extrémité (12 ; 52) et une pièce centrale (13 ; 53) reliant les deux pièces d'extrémité.
d. Le premier module de batterie (100 ; 200) et le deuxième module de batterie (100 ; 300) sont orientés de telle sorte que les faces extérieures de boîtier des modules de batterie pourvues des évidements périphériques soient orientées parallèlement les unes aux autres, et que le premier évidement périphérique du premier module de batterie et le deuxième évidement périphérique du deuxième module de batterie soient situés côte à côte.
e. L'élément de liaison est inséré dans les évidements périphériques situés côte à côte du premier module de batterie et du deuxième module de batterie de telle sorte que la première pièce d'extrémité de l'élément de liaison s'engage dans le premier évidement périphérique du premier module de batterie et que la deuxième pièce d'extrémité de l'élément de liaison s'engage dans le deuxième évidement périphérique du deuxième module de batterie.
f. Après l'insertion de l'élément de liaison (10 ; 50) dans les évidements périphériques situés côte à côte (101, 102 ; 201, 302) des modules de batterie (100 ; 200, 300), un moyen d'écartement (30) est introduit dans la pièce centrale (13 ; 53) de l'élément de liaison pour écarter l'élément de liaison.

13. Procédé selon la revendication 12, présentant la caractéristique supplémentaire suivante :
a. Le module de batterie (100 ; 200, 300) prévu selon le procédé et/ou l'élément de liaison (10 ; 50) prévu selon le procédé présentent au moins l'une des caractéristiques des revendications 2 à 11.
